# EUROPEAN PATENT SPECIFICATION

(11) **EP 1 792 697 B1**
(45) Date of publication and mention of the grant of the patent: **23.04.2008**
(21) Application number: 06425702.5
(22) Date of filing: 12.10.2006
(51) Int. Cl.: B27M 3/18, B27M 1/08, B27G 5/02, B23Q 39/04, B27M 3/00

(54) **Machine used for manufacturing door frames**
Maschine zur Herstellung von Türrahmen
Machine à fabriquer des cadres de porte

(30) Priority: 01.12.2005 IT MC20050128
(43) Date of publication of application: 06.06.2007
(73) Proprietor: Essepigi S.r.l., 61038 Orciano di Pesaro, (PS) (IT)
(72) Inventor: Patregnani, Luigi, 61038 Orciano di Pesaro (PU) (IT)
(74) Representative: Baldi, Claudio

(56) References cited:
- EP-A- 0 508 919
- EP-A- 0 836 910
- EP-A2- 1 075 915

## Description

The present patent application for industrial invention is related to a machine used for manufacturing door frames, and in particular door jambs, that is to say the pair of lateral uprights that form the door frame with the architrave (see for example EP 1075915 A).

As it is known, one of the jambs is provided with at least one pair of hinges or pivots to support the door, while the other jamb is provided with a metal plate usually with two slots, i.e. an upper slot for the catch of the lock and a lower slot for the latch actuated by the key, if any.

Each of the jambs undergoes different machining operations, i.e. material removing operations, such as made-to-measure cutting, drilling, milling or assembly, such as automatic application of hinges.

The frame architrave undergoes two cutting operations in order cut its ends at 0 or 45 degree angles, according to the type of matching with the jambs.

In case of 45-degree cutting, the two ends of the architrave must be perforated to allow the insertion of dowels or screws for connection to the jambs, which must be cut at 45 degree angle and perforated on top.

As mentioned above, one of the uprights is provided with hinges, and must therefore be perforated on the back to drill the holes or slots for the hinges, which are usually assembled by automatic machines designed to apply the said hinges automatically from a feed station.

The other upright, that is to say the upright without hinges, undergoes milling in order to obtain the housing of the said metal plate, which is interfaced with the stop plate of the lock contained in a specific housing carved in the door.

Normally, these operations are performed in a sequence, transferring and handling the wooden piece. Although two or more operations can be executed by automatic machines, no machine has been so far devised to execute all the operations as illustrated above.

For instance, automatic machines are used for 0 or 45-degree cutting and drilling of the dowels used to connect jambs and architrave. Some machines are also provided with a milling head for the plate, although they are not able to drill holes for hinges or apply hinges.

The so-called anuba hinges inserting machines are provided with a drilling head and a screwing head, to drill holes for the anuba hinges and screw the anuba hinges to the said holes, respectively.

Finally, milling machines are used to obtain the housing for the plate.

The only solution to save on time and costs while transferring the piece from one machine to another is to use extremely complex and expensive machines, which basically consist in a work centre with tool-change function in order to execute different machining operations on the piece.

In any case, in addition to high construction costs, work centres are also penalized by poor productivity, since the single operations must be carried out individually, one after the other.

The purpose of the present invention is to obtain a simple and relatively inexpensive machine designed to perform all the mechanical operations that are necessary for the manufacturing of door frame, and in particular: butting and drilling of architrave and jambs, drilling of the back of uprights for the holes used to apply anuba hinges, screwing of "anuba" hinges into fixing holes, milling to obtain the housing of the lock plate or the housings of other types of hinges.

Another purpose of the present invention is to obtain a machine with the aforementioned operating functions capable of executing multiple simultaneous operations in different parts of the machined piece, thus saving on the time needed for the entire work cycle.

The machine of the invention comprises a single longitudinal frame that supports and guides the following mobile operating units:
- a lateral pair of identical operating groups in opposite position, each of them being equipped with a cutting and a drilling device, respectively used for butting and drilling the ends of the architrave or jamb;
- at least one central unit that incorporates three different operating groups, designed to machine the uprights of the frame, the first being designed to drill holes for anuba hinges, the second being designed to screw anuba hinges in the corresponding fixing hole, the third being designed to mill the housing of the lock plate or the housings of other types of hinges.

The said central unit also incorporates a feed station for anuba hinges, equipped with a mechanism capable of picking one hinge at a time and place it on the screwing head.

For major clarity, the description of the machine of the invention continues with reference to the enclosed drawings, which are only for illustrative, not limitative purposes, whereby:

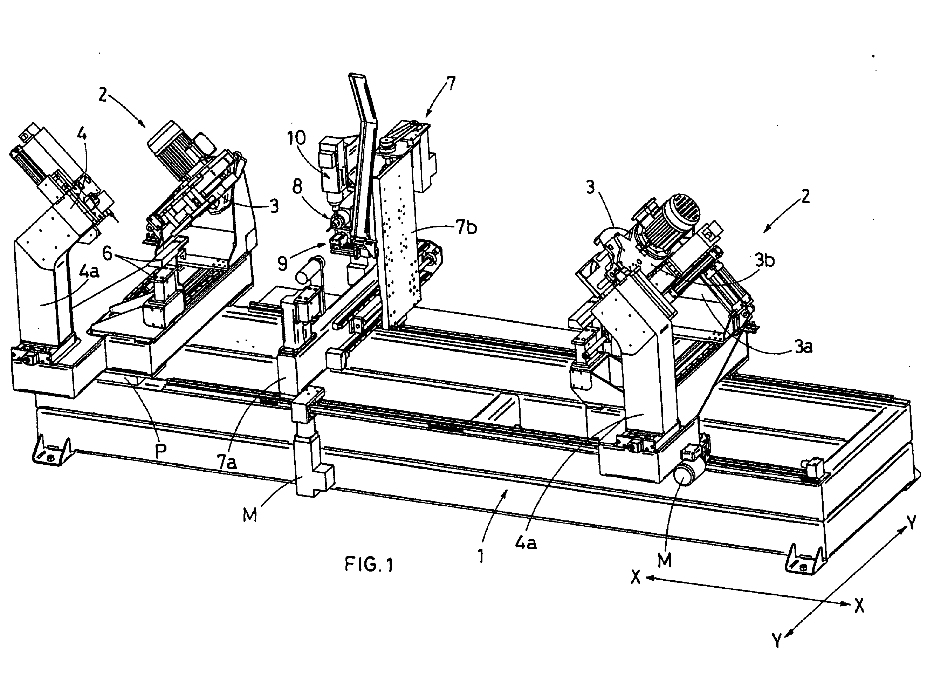

- fig. 1 is an axonometric diagrammatic front view of the machine of the invention;

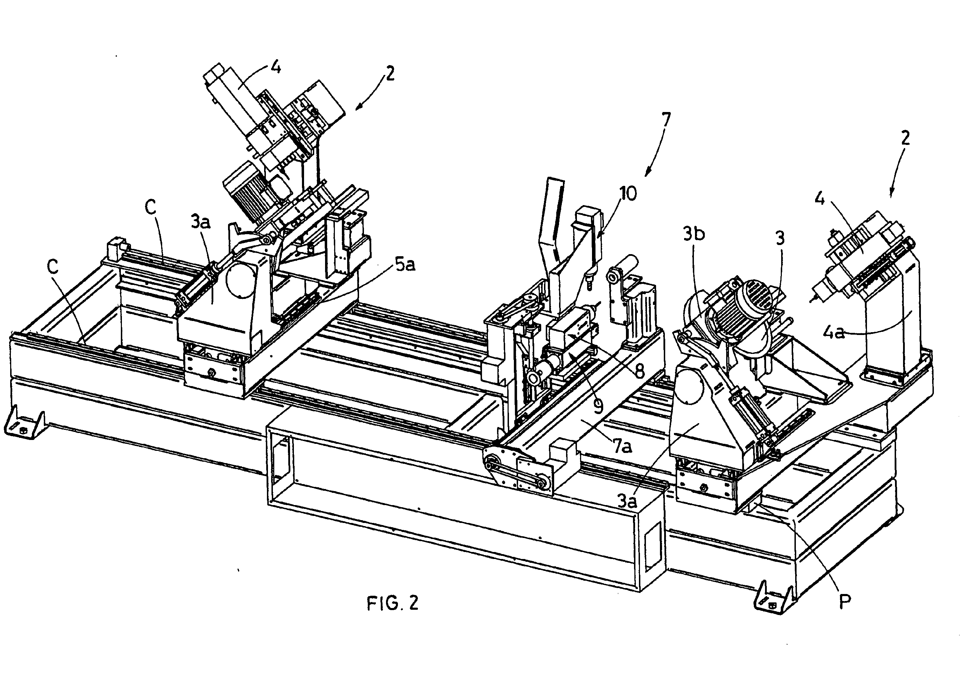

- fig. 2 is an axonometric diagrammatic rear view of the machine of the invention;

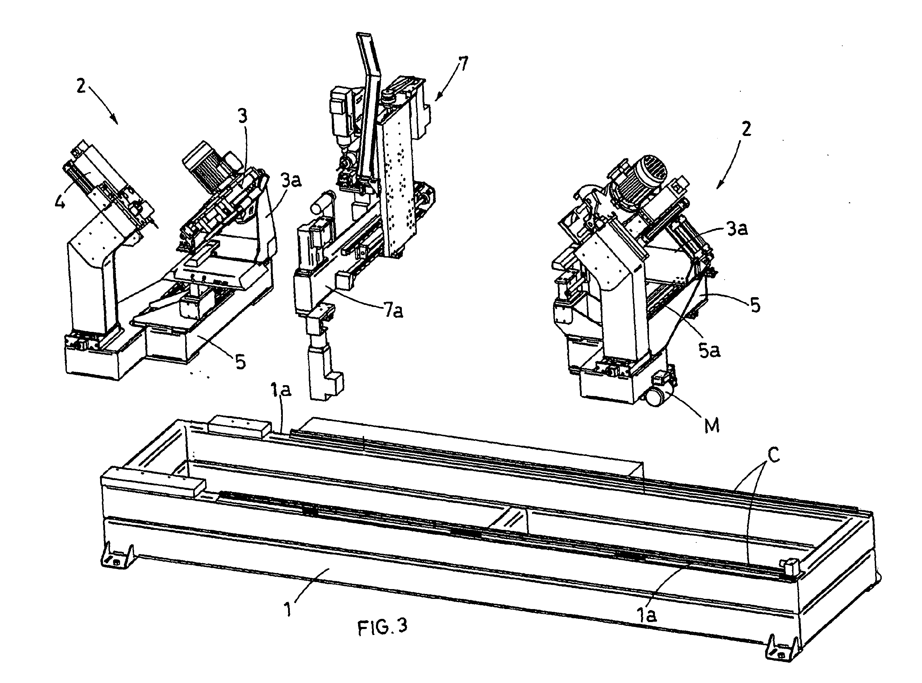

- fig. 3 is basically the same as fig. 1, except for the fact that all the mobile operating units of the machine are detached from the support and guide base;
- fig. 4 is an axonometric diagrammatic three-quarter front view of the central unit of the machine of the invention;
- fig. 5 is an axonometric diagrammatic three-quarter rear view of the central unit of the machine of the invention;
- fig. 6 is a front view of the central unit.

With reference to the figures above, the machine of the invention comprises a longitudinal base (1), on which multiple operating units with slides (P) are positioned, each of them being driven by corresponding actuators, comprising in particular a motor reducer (M) that actuates a sprocket that engages with one of the two racks (C) situated in the proximity of the longitudinal borders (1 a) of the base (1).

More precisely, two identical operating groups (2) slide on the two opposite ends of the base (1), in opposite position, each of them being equipped with a circular saw (3) and a drilling unit (4), respectively used to butt and drill the piece at the 45-degree ends, and drill holes for the dowels or screws used to connect the architrave to the two uprights of the frame.

Each group (2), of known type, comprises a carriage (5) that slides along the longitudinal axis X-X of the base (1).

The carriage (5) is equipped with a first turret (3a) to support the circular saw (3), which is mounted on a shelf (3b) that rotates around a horizontal axis, in such a way as to transversally cut the piece with variable angle from 0 to 45 degrees.

The turret (3a) slides with respect to the carriage (5) along a transversal axis Y-Y because of the presence of two tracks (5a) on the carriage (5) and because of the driving action of an actuator.

A second turret (4) is fixed on the carriage (5) to support the drilling unit (4).

Each carriage (5) is equipped with the pneumatic vices (6) to hold the machined piece.

A third central unit (7) is installed between the opposite pair of operating groups (2), which incorporates three different operating groups (8,9 and 10), the first (8) being designed to drill holes for anuba hinges, the second (9) being designed to screw anuba hinges in the corresponding fixing hole, the third (10) being designed to mill the housing of the lock plate or the housings of other types of hinges.

More precisely, the central unit (7) comprises:
- a carriage (7a) that slides along the longitudinal axis X-X of the base (1);
- a turret (7a) that slides with respect to the carriage (7a) along a transversal axis Y-Y;
- a slide (7c) that makes alternate vertical travels with respect to the turret (7b) along an axis Z-Z;

The three operating groups (8, 9 and 10) are rigidly fixed on the slide (7c), which moves with respect to the base (1) according to the three orthogonal axes of a 3D Cartesian system (X, Y, Z).

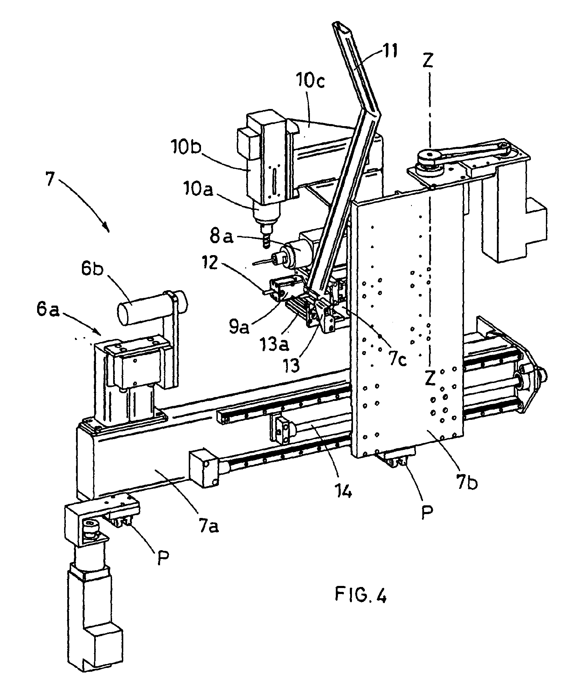

With special reference to figures 4, 5 and 6, this description continues with a detailed illustration of the three operating groups (8, 9 and 10).

The first group (8) is formed of a drilling unit (8a) with transversal axis Y-Y, with a motor (8b) mounted on a second motor (9b) that actuates the screwing tool (9a), which is an integral part of the second group (9).

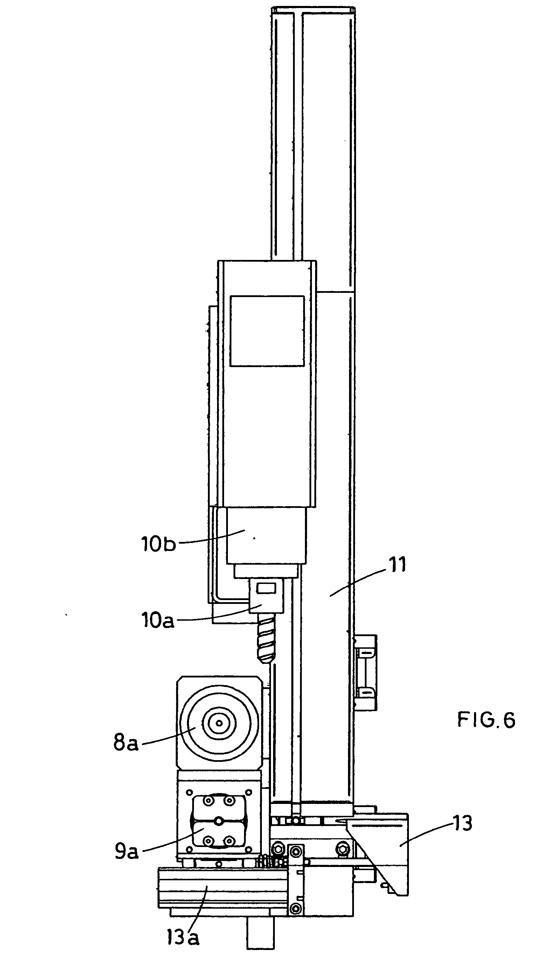

With reference to fig. 6, the rotation axis of the drilling unit (8a) and the rotation axis of the screwing tool (9a) are parallel and lay on the same vertical plane to guarantee maximum longitudinal solidity to the two units (8 and 9).

The third group (10) is composed of a milling head (10a) with vertical axis, with a motor (10b) fixed to a plate (10c) firmly fixed to the slide (7c).

In order to reduce the longitudinal dimensions of the central unit (7), the plate (10c) lays on a vertical plane proximal to the plane of the rotation axes of the drilling unit (8a) and screwing tool (9a).

The side of the plate (10c) is fixed to the feed station (11) of anuba hinges (12), which are taken one by one from the bottom of the feed station (11) and transferred inside the screwing tool (9a).

The picking and transfer operation is entrusted to a presser (13) actuated by a pneumatic cylinder (13a) situated under the screwing tool (9a), in such a way that the longitudinal dimension is contained within the space occupied by the pair of the groups (8 and 9) and by the third group (10) in parallel position to the first two groups.

The movement of the slide (7c) with respect to the turret (7b) and the movement of the turret (7b) with respect to the carriage (7a) are obtained by means of a traditional coupling of screw-nut, ball recirculation type.

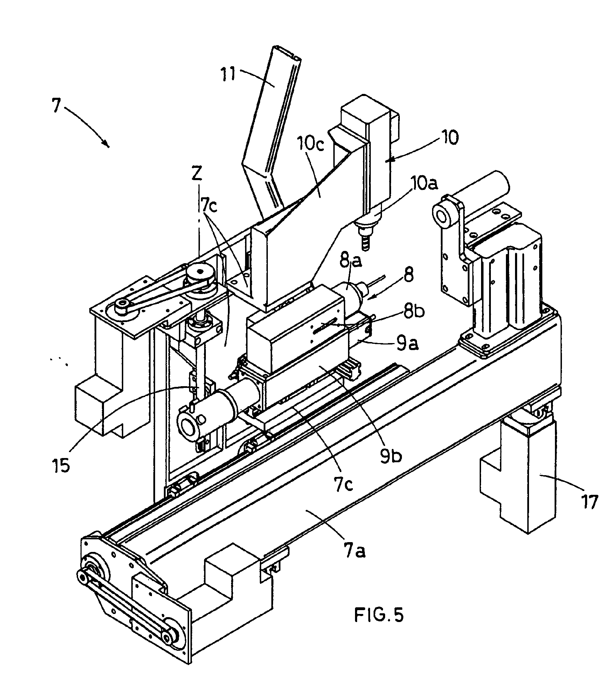

Fig. 4 illustrates the threaded bar (14) with horizontal axis that determined travels along the Y-Y axis of the turret (7b), while fig. 5 illustrates the threaded bar (15) with vertical axis that determines travels along the Z-Z axis of the slide (7c).

The carriage (7a) is fitted with an additional pneumatic tool (6a) to collect the piece; in this case, the tool (6a) has one jaw and one idle roll (6b), and not a pair of jaws, due to the fact that the said central unit (7) slides with respect to the machined piece, which is grabbed and blocked by the tool (6), which opens at the end of the machining operation, when the piece is changed.

For this reason, it is important to reduce the longitudinal dimension of the central unit, which needs to get as close as possible to the lateral units (2) when the operating groups (8) and (9) respectively drill the holes for anuba hinges and apply them on the back of the upright.

It is understood that several modifications to the constructive details are possible, without leaving the scope of the present invention as defined in the appended claims, such as the use of a support frame in which the operating units are hung, and not positioned as illustrated in the enclosed figures.

## Claims

1. Machine used for manufacturing door frames, of the type comprising a frame (1) that supports two identical operating groups (2), of known type, in opposite position, each of them being equipped with a circular saw (3) and a drilling unit (4), respectively designed to butt and drill the piece at its 45-degree cut ends, machine being **characterised in that** it comprises at least a third central unit (7) between the opposite pair of operating groups (2), which incorporates three different operating groups (8, 9 and 10), the first (8) being designed to drill holes for anuba hinges, the second (9) being designed to screw anuba hinges in the corresponding fixing hole, the third (10) being designed to mill the housing of the lock plate or the housings of other types of hinges.

2. Machine as defined in the preceding claim, **characterised in that** the said central unit (7) comprises:
- a motorized carriage (7a) that slides along the longitudinal axis X-X of the frame (1);
- a motorize turret (7a) that slides with respect to the carriage (7a) along a transversal axis Y-Y;
- a motorized slide (7c) that makes alternate vertical travels with respect to the turret (7b) along an axis Z-Z;
it being provided that the three operating groups (8, 9 and 10) are rigidly fixed on the slide (7c).

3. Machine as defined in the preceding claim, **characterised in that** the first operating group (8) is formed of a drilling unit (8a) with transversal axis Y-Y, with a motor (8b) mounted on a second motor (9b) that actuates the screwing tool (9a), which is an integral part of the second group (9); it being provided that the rotation axis of the drilling unit (8a) and the rotation axis of the screwing tool (9a) are parallel and lay on the same vertical plane.

4. Machine as defined in the preceding claim, **characterised in that** the third operating group (10) is composed of a milling head (10a) with vertical axis, with a motor (10b) fixed to a plate (10c) firmly fixed to the slide (7c) and laying on a vertical plane proximal to the vertical plane of the rotation axes of the drilling unit (8a) and of the screwing tool (9a).

5. Machine as defined in the preceding claim, **characterised in that** a feed station (11) of anuba hinges (12) is fixed on the side of the plate (10c), from which the anuba hinges (12) are individually taken from the bottom of the station (11) and transferred inside the screwing tool (9a) by means of a presser (13) actuated by a pneumatic cylinder (13a) situated below the screwing tool (9a).

6. Machine as defined in one of the preceding claims, **characterised in that** it comprises different means (15 and 14), of screw-nut, ball recirculation type, used to move the slide (7c) with respect to the turret (7b) and the turret (7b) with respect to the carriage (7a).

7. Machine as defined in one of the preceding claims, **characterised in that** the carriage (7a) is fitted with a pneumatic tool (6a) to collect the machined piece, formed of one jaw and one idle roll (6b).

8. Machine as defined in one of the preceding claims, **characterised in that** the said frame (1) consists in a longitudinal base (1), on which multiple operating units (2 and 7) with slides (P) are positioned, each of them being driven by a corresponding motor reducer (M) that actuates a sprocket that engages with one of the two longitudinal racks (C) situated in the proximity of the longitudinal borders (1a) of the base (1).

## Patentansprüche

1. Maschine für die Herstellung von Türrahmen, die einen Trägerrahmen (1) zur Halterung zweier identischer Arbeitsgruppen (2) bekannter Art umfasst, die sich spiegelbildlich gegenüberliegen und jeweils mit einer Kreissäge (3) und einer Bohreinheit (4) ausgestattet sind, die jeweils für das Stumpfstoßen und das Bohren des Werkstücks an seinen auf 45° zugeschnittenen Enden vorgesehen sind, wobei die Maschine **dadurch gekennzeichnet ist, dass** sie zwischen dem Arbeitsgruppenpaar (2) mindestens eine dritte Zentraleinheit umfasst (7), in der drei verschiedene Arbeitsgruppen (8, 9 und 10) enthalten sind, deren erste (8) in der Lage ist, Montagelöcher für "Anuba"-Scharniere zu bohren, deren zweite (9) in der Lage ist, die "Anuba"-Scharniere in die Montagelöcher einzuschrauben und deren dritte (10) in der Lage ist, eine Fräsung vorzunehmen, um den Sitz für die Gegenplatte des Türschlosses oder Montagesitze für andere Arten von Scharnieren, beispielsweise Kipp-, Versenk- oder Kugelscharniere, zu realisieren.

2. Maschine gemäß dem vorstehenden Anspruch, **dadurch gekennzeichnet, dass** die Zentraleinheit (7) folgendes umfasst:
- einen motorisierten Wagen (7a), der in der Lage ist, auf der Längsachse X-X des Rahmens (1) entlangzugleiten;
- einen motorisierten Turm (7b), der in der Lage ist - bezogen auf den Schlitten (7a) - auf der Querachse Y-Y entlangzugleiten;
- einen motorisierten Schlitten (7c), der in der Lage ist, bezogen auf den Turm (7b) - vertikale Wechselhübe entlang der Achse Z-Z auszuführen;
wobei vorgesehen ist, dass die drei Arbeitsgruppen (8, 9 und 10) starr an der Kante des Schlittens (7c) befestigt sind.

3. Maschine gemäß dem vorstehenden Anspruch, **dadurch gekennzeichnet, dass** die erste Arbeitsgruppe (8) aus einer Bohreinheit (8a) mit Querachse Y-Y besteht, deren Motor (8b) über einem zweiten Motor (9b) montiert ist, der eine Einschraubzange (9a) betätigt, die Bestandteil der zweiten Gruppe (9) ist; wobei vorgesehen ist, dass die Rotationsachse der Bohreinheit (8a) und die der Einschraubzange (9a) parallel zueinander auf derselben vertikalen Ebene liegen.

4. Maschine gemäß dem vorstehenden Anspruch, **dadurch gekennzeichnet, dass** die dritte Arbeitsgruppe (10) aus einem Fräskopf (10a) mit vertikaler Achse besteht, dessen Motor (10b) an einer Freiendplatte (10c) befestigt ist, die ihrerseits starr am Schlitten (7c) befestigt ist und auf einer vertikalen Ebene in der Nähe der Lagerungsebene der Rotationsachsen der Bohreinheit (8a) und der Einschraubzange (9a) liegt.

5. Maschine gemäß dem vorstehenden Anspruch, **dadurch gekennzeichnet, dass** sie einen auf der Seite der Platte (10c) befindlichen Behälter (11) für die "Anuba"-Scharniere (12) umfasst, die einzeln vom Boden des Behälters (11) entnommen und ins Innere der Einschraubzange (9a) mit Hilfe eines Niederhalters (13) transportiert werden, der durch einen Pneumatikzylinder (13a) betätigt wird, der sich oberhalb der Einschraubzange (9a) befindet.

6. Maschine gemäß einem der vorstehenden Ansprüche, **dadurch gekennzeichnet, dass** sie separate Mittel (15 und 14) in Form einer Schraube und einer Schraubenmutter mit Kugelrezirkulation für das Verschieben des Schlittens (7c) bezogen auf den Turm (7b) und das Verschieben des Turmes (7b) bezogen auf den Wagen (7a) umfasst.

7. Maschine gemäß einem der vorstehenden Ansprüche, **dadurch gekennzeichnet, dass** sie eine am Wagen (7a) angebrachte Pneumatikzange (6a) zum Greifen des Werkstücks umfasst, die aus einer Backe und einer lose drehbaren Anschlagwalze (6b) besteht.

8. Maschine gemäß einem der vorstehenden Ansprüche, **dadurch gekennzeichnet, dass** der Trägerrahmen (1) aus einem sich längs erstreckenden Sockel besteht, auf dem mit Hilfe von Gleitschuhen (P) die Arbeitseinheiten (2 und 7) aufliegen, die jeweils von einem Getriebemotor (M) gezogen werden, der eine Spule betätigt, die in eine der beiden Längszahnstangen (C) eingreift, die entlang der Längskanten (1a) des Sockels (1) angeordnet sind.

## Revendications

1. Machine pour l'usinage des cadres des portes, du type comprenant un cadre portant (1) qui supporte deux groupes opérationnels identiques (2), du type connu, opposés de manière spéculaire et chacun desquels doté d'une scie à trancher (3) et d'une unité de forage (4), respectivement préposées à l'about de la pièce et à son forage en correspondance de ses extrémités coupées à 45°, machine **caractérisée en ce qu'**elle comprend, interposée entre la paire de groupes opérationnels (2), au moins une troisième unité centrale (7) qui englobe trois groupes opérationnels distincts (8, 9 et 10), le premier (8) en mesure de réaliser les trous pour le montage de charnières du type "anuba", le deuxième (9) en mesure de visser les charnières du type "anuba" dans le trou de montage correspondant, le troisième (10) en mesure de procéder à une opération de fraisage pour réaliser le siège de la contreplaque de la serrure ou pour réaliser les sièges de montage d'autres types de charnières, comme celle à bascule, escamotable ou avec pommeau.

2. Machine selon la revendication précédente, **caractérisée en ce que** la dite unité centrale (7) comprend :
- un chariot (7a), motorisé, ayant la capacité de glisser selon l'axe longitudinal X-X du cadre (1);
- une tourelle (7a), motorisée, ayant la capacité de glisser, par rapport au dit chariot (7a), selon un axe transversal Y-Y ;
- un traîneau (7c), motorisé, ayant la capacité d'accomplir des courses alternées en verticale par rapport au dit tourillon (7b), le long d'un axe Z-Z ;
étant prévu que les trois groupes opérationnels (8, 9 et 10) soient fixés rigidement à bord du dit traîneau (7c).

3. Machine selon la revendication précédente, **caractérisée en ce que** le premier groupe opérationnel (8) est formé d'une unité de forage (8a), ayant axe transversal Y-Y, dont le moteur (8b) est monté au-dessus d'un deuxième moteur (9b) qui active une pince à vissage (9a) faisant partie intégrante du deuxième groupe (9) ; étant prévu que l'axe de rotation de l'unité de forage (8a) et de celui de la pince à vissage (9a) soient parallèles et disposés sur le même plan vertical.

4. Machine selon la revendication précédente, **caractérisée en ce que** le troisième groupe opérationnel (10) est formé d'une fraiseuse à tête (10a), ayant axe vertical, dont le moteur (10b) est fixé à un plastron drapeau (10c) solidairement fixé au dit traîneau (7c) et disposé sur un plan vertical proche de celui où sont disposés les axes de rotation de l'unité de forage (8a) et de la pince à vissage (9a).

5. Machine selon la revendication précédente, **caractérisée en ce qu'**elle comprend, fixé sur le côté du dit plastron (10c), un réservoir (11) des charnières dites "anuba" (12), qui sont au fur et à mesure prélevées l'une après l'autre sur le fond du dit réservoir (11) et transférées à l'intérieur de la pince à vissage (9a) suite à l'oeuvre d'un presseur (13), activé par un cylindre pneumatique (13a), situé au-dessous de la pince à vissage (9a).

6. Machine selon l'une des revendications précédentes, **caractérisée en ce qu'**elle comprend des moyens distincts (15 et 14), du type à vis et à écrou avec recirculation de billes, pour le déplacement du traîneau (7c) par rapport au tourillon (7b) et pour le déplacement du tourillon (7b) par rapport au chariot (7a).

7. Machine selon l'une des revendications précédentes, **caractérisée en ce qu'**elle comprend, appliquée sur le chariot (7a), une pince pneumatique (6a) pour le prélèvement de la pièce en usinage, formée par une griffe et un rouleau de dressage (6b), qui tourne à fol.

8. Machine selon l'une des revendications précédentes, **caractérisée en ce que** le dit cadre portant (1) consiste en un socle (1), à développement longitudinal, sur lequel s'appuient, à l'aide de patins de coulissement (P), les unités opérationnelles (2 et 7), chacune entraînée par un respectif motoréducteur (M) qui active une bobine qui engrène avec l'une des deux crémaillères longitudinales (C), situées en proximité des bords longitudinaux (1a) du socle (1).
